# EUROPÄISCHE PATENTSCHRIFT

(11) **EP 2 989 860 B1**
(45) Veröffentlichungstag und Bekanntmachung des Hinweises auf die Patenterteilung: **26.09.2018**
(21) Anmeldenummer: 14732060.0
(22) Anmeldetag: 25.04.2014
(51) Int. Cl.: H05B 33/08, H02M 3/335, H02M 1/00

(54) **MODUL MIT MESSSIGNALRÜCKFÜHRUNG ÜBER POTENTIALTRENNENDEN WANDLER**
MODULE HAVING MEASUREMENT SIGNAL FEEDBACK VIA A GALVANICALLY ISOLATED CONVERTER
MODULE À RETOUR DU SIGNAL DE MESURE PAR TRANSDUCTEUR A SEPARATION DE POTENTIEL

(30) Priorität: 26.04.2013 DE 102013207700
(43) Veröffentlichungstag der Anmeldung: 02.03.2016
(73) Patentinhaber: Tridonic GmbH & Co. KG, 6851 Dornbirn (AT)
(72) Erfinder: DÜNSER, Mathias, 6800 Feldkirch (AT); VONACH, Christoph, 6850 Dornbirn (AT); MOHR, Martin, 6845 Hohenems (AT)
(74) Vertreter: Rupp, Christian
(86) Internationale Anmeldenummer: PCT/AT2014/000085
(87) Internationale Veröffentlichungsnummer: WO 2014/172727

(56) Entgegenhaltungen:
- EP-A1- 2 538 534
- WO-A1-2012/167161
- WO-A1-2013/159131
- US-A1- 2005 259 448
- US-A1- 2009 001 954
- US-A1- 2012 169 245

## Beschreibung

Die vorliegende Erfindung betrifft ein Modul für den Betrieb wenigstens eines Leuchtmittels/einer Leuchtmittelstrecke, vorzugsweise wenigstens einer LED.

Insbesondere betrifft die Erfindung ein LED-Modul oder einen LED-Konverter, der eine elektrisch isolierende Barriere aufweist, z.B. eine sogenannte SELV-Barriere (safety extra low voltage barrier), also eine Sicherheitskleinspannungs-Barriere, die z.B. Schaltungsbereiche mit Sicherheitskleinspannung von anderen Schaltungsteilen isoliert.

Die Erfindung bezieht sich dabei besonders auf ein Modul, dessen Ausgangsleistung/Ausgangsstrom/Ausgangspannung (im Folgenden wird lediglich der Begriff Ausgangsspannung verwendet) sich dadurch einstellen lässt, dass über einen Wahleingang des Moduls eine Wahl der Ausgangsspannung erfolgt. Beispielsweise kann mit dem Wahleingang wenigstens ein Wahlwiderstand verbunden werden und abhängig von einem Widerstandswert des verbundenen Wahlwiderstands dann die Ausgangsspannung eingestellt werden.

Eine Steuerschaltung des Moduls erfasst daher ein Messsignal, das den Widerstandswert des verbundenen Widerstands wiedergibt. Dieses Konzept wird im Folgenden mit "Iselect" bezeichnet. Insbesondere kann an dem Wahlwiederstand ein Spannungs- oder Strommesssignal hinsichtlich der Spannung/des Stroms durch das Leuchtmittel (Iselect) abgegriffen werden.

Weiter betrifft die Erfindung Module, die eine Temperaturmesseinheit aufweisen (z.B. NTC, negative temperature coefficient resistor, PTC, positive temperature coefficient resister, oder Thermistor).

Die Steuerschaltung kann also alternativ oder zusätzlich wenigstens ein weiteres Messsignal erfassen, das eine von der Temperaturmesseinheit ermittelte Temperatur wiedergibt. Dies kann z.B. ein Temperaturkoeffizient sein, der insbesondere mittels eines variablen elektrischen Widerstands ermittelt wird, dessen Wert durch eine Temperaturänderung reproduzierbar variiert. In diesem Fall gibt dann das Messsignal wiederum einen Widerstandswert an. Die Messsignale sind im Allgemeinen Spannungen/Ströme, die entweder Widerstandswerte wiedergeben oder anhand derer die Widerstandswerte bestimmt werden können.

Die Temperatur wird beispielsweise ermittelt, um abhängig von der ermittelten Temperatur die Ausgangsspannung des Moduls zu verändern, beispielsweise um das Modul bei zu hohen/zu niedrigen Temperaturen abzuschalten. Dieses Konzept wird im Folgenden "ITM" (intelligent temperature management) genannt.

Die oben genannte elektrisch isolierende Barriere teilt das Modul bezüglich der Barriere in eine Primärseite und in eine Sekundärseite, die z.B. auch als SELV-Seite bezeichnet wird. Die Primärseite ist dabei häufig direkt oder indirekt ausgehend von einer Netzversorgung (AC/DC-Spannung/-Strom) versorgbar, während ausgehend von der Sekundärseite das anschließbare Leuchtmittel direkt oder indirekt versorgbar ist.

Die Erfindung zielt dabei auf Module ab, bei denen die Erfassung und Auswertung der Messsignale durch eine primärseitige Steuerschaltung erfolgt. D.h., dass auf der Sekundärseite vorzugsweise keine Steuerschaltung zur Erfassung und Auswertung vorgesehen ist, insbesondere kein IC, ASIC oder Mikrokontroller.

Selbst bei verhältnismäßig einfachen Anwendungen ist es hier oft erwünscht, Information bzw. Messsignale von der Sekundärseite der Barriere zu der primärseitigen Steuereinheit zu führen.

Beispielsweise ist es gewünscht, eine Temperaturinformation, z.B. ausgelesen über einen sekundärseitigen Temperaturmesswiderstand (NTC, PTC), auf die Primärseite zu führen. Das Abgreifen der Temperaturinformation auf der Sekundärseite ist in diesem Fall erwünscht, da die Temperaturmesseinheit so nahe dem Leuchtmittel angeordnet werden kann.

Weiter ist der beispielsweise mit dem Wahleingang des Moduls verbindbare Wahlwiderstand zur Einstellung der Ausgangsspannung ein Bauteil, welches durch einen menschlichen Benutzer eingesetzt und ausgetauscht werden kann, insbesondere durch anders dimensionierte Widerstände.

Dabei kann der menschliche Benutzer mit leitenden Teilen des Moduls in Kontakt kommen, weshalb vorzugsweise die Sekundärseite des Moduls mit der Sicherheitskleinspannung (Niederspannungsleistungsversorgung, SELV oder LVPS, low voltage power source) betrieben werden kann. Daher ist es oft erwünscht, ein Spannungs- oder Strommesssignal hinsichtlich der Spannung/des Stroms durch das Leuchtmittel an dem Wahlwiderstand abzugreifen und auf die Primärseite zurückzuführen. Andererseits kann die primärseitige Steuerschaltung dann auf der Primärseite mit einer höheren Spannung versorgt sein.

Beim Stand der Technik ist dazu notwendig, in verhältnismäßig aufwendiger Weise, einen durch eine auf der Sekundärseite vorgesehene Niedervoltversorgung gespeisten A/D-Wandler vorzusehen, der dann beispielsweise mittels eines Optokopplers die genannten Signale zu der Steuereinheit auf der Primärseite der elektrisch isolierenden Barriere zurückführt.

Bekannt sind beispielsweise die Dokumente US 2012/169245 A1, EP 2 538 534 A1, WO 2012/167161 A1, US 2009/001954 und US 2005/259448 A1.

Die Erfindung möchte nun den Schaltungsaufwand und entsprechend auch die Kosten verringern, und insbesondere den A/D-Wandler, die Optokoppler und die Niedervoltversorgung in Fortfall bringen.

Die Erfindung stellt daher eine Vorrichtung und ein Verfahren gemäß der unabhängigen Ansprüche bereit. Weiterbildungen der Erfindung sind Gegenstand der abhängigen Ansprüche.

In einem Aspekt stellt die Erfindung ein Modul für den Betrieb wenigstens eines Leuchtmittels, vorzugsweise wenigstens einer LED, bereit, mit wenigstens einer elektrisch isolierenden Barriere, die eine ausgehend von einer Netzspannung versorgbare Primärseite von einer Sekundärseite des Moduls trennt, von der vorzugsweise das wenigstens eine Leuchtmittel versorgbar ist, wobei eine sekundärseitige passive Schaltung vorgesehen ist, die in einem Versorgungspfad über einen potentialtrennenden Wandler über die Barriere hinweg mit einer primärseitigen Steuerschaltung verbunden ist, und wobei die primärseitige Steuerschaltung dazu ausgelegt ist, an die sekundärseitige passive Schaltung (über den Wandler) ein Testsignal mit vorgegebener zeitlicher Entwicklung anzulegen und gleichzeitig ein dadurch sekundärseitig erzeugtes, in dem Versorgungspfad zurückgeführtes Messsignal, insbesondere einen Stromanstieg in dem Wandler, zu überwachen.

Die passive Schaltung kann sekundärseitig wenigstens zwei Widerstände aufweisen, die mit einem Schaltelement verbunden sind, das so ausgelegt ist, dass es bei Anlegen des Testsignals auf der Primärseite zunächst den Versorgungspfad über einen Widerstand/beide Widerstände schaltet und zeitlich beabstandet den Versorgungspfad über beide Widerstände/einen Widerstand schaltet.

Die passive Schaltung kann sekundärseitig wenigstens zwei Widerstände aufweisen, die mit wenigsten zwei Schaltelementen verbunden sind.

Die Schaltelemente können so ausgelegt sein, dass bei Anlegen des Testsignals auf der Primärseite zunächst der Versorgungspfad über den ersten Widerstand und im zeitlichen Abstand der Versorgungspfad zusätzlich oder alternativ über den zweiten Widerstand geschaltet wird.

Die Schaltelemente können so ausgelegt sein, dass bei Anlegen des Testsignals auf der Primärseite die sekundärseitigen Widerstände binär permutiert eingeschaltet/ausgeschaltet werden, wobei die Permutation Wiederholungen aufweisen kann.

Die primärseitige Steuerschaltung kann die Messsignale an dem Wandler im zeitlichen Abstand erfassen, die einen Widerstandswert des/der momentan im Versorgungspfad in der sekundärseitigen passiven Schaltung verbundenen Widerstands/ Widerstände wiedergibt/wiedergeben.

Sekundärseitig kann vorzugsweise keine Spannungs-/Stromversorgung vorgesehen sein.

Die Erfassung der Messsignale kann wiederholt und insbesondere zyklisch erfolgen.

Die Steuerschaltung kann eine Extrapolation auf Basis wenigstens zwei erfasster Messsignale durchführen.

Die Extrapolation kann zeitlich zurückgerichtet erfolgen.

Die Extrapolation kann einen Widerstandswert der passiven Schaltung zum Zeitpunkt des Anlegens des Testsignals bestimmen.

In einem weiteren Aspekt stellt die Erfindung ein Vorschaltgerät mit einem Modul bereit, wie es vorstehend beschrieben ist.

In einem anderen Aspekt stellt die Erfindung eine Leuchte mit einem Modul und/oder einem Vorschaltgerät bereit, wie es vorstehend beschrieben ist.

In noch einem weiteren Aspekt stellt die Erfindung ein Verfahren zur passiven Rückführung eines Messsignals von der Sekundärseite einer elektrisch isolierenden Barriere zu einer primärseitig dazu angeordneten Steuerschaltung bereit, die in einem Versorgungspfad mit einer sekundärseitigen passiven Schaltung über einen potentialtrennenden Wandler über die Barriere hinweg verbunden ist, wobei die primärseitige Steuerschaltung an die sekundärseitige passive Schaltung ein Testsignal mit vorgegebener zeitlicher Entwicklung anlegt und gleichzeitig ein dadurch sekundärseitig erzeugtes über den Versorgungspfad zurückgeführtes Messsignal, insbesondere einen Stromanstieg in dem Wandler überwacht.

Die Erfindung wird nunmehr auch mit Blick auf die Figuren beschrieben. Dabei zeigt:
- Fig. 1: exemplarisch eine erfindungsgemäße Schaltungsanordnung.
- Fig. 2: exemplarisch den Verlauf eines Messsignals.
- Fig. 3: schematisch eine von der Steuerschaltung durchgeführte Extrapolation.
- Fig. 4: exemplarisch eine erste Variante einer erfindungsgemäßen Schaltungsanordnung mit mehreren sekundärseitigen Widerständen.
- Fig. 5: exemplarisch eine zweite Variante einer erfindungsgemäßen Schaltungsanordnung mit mehreren sekundärseitigen Widerständen.

Die Erfindung bezieht sich auf die Überbrückung der elektrisch isolierenden Barriere (SELV-Barriere) des Moduls. Information soll von der Sekundärseite der Barriere auf die Primärseite unter geringem schaltungstechnischem Aufwand zurückgeführt werden. Das informationsübermittelnde Glied ist gemäß dieser Erfindung ein potentialtrennender Wandler, insbesondere ein Transformator, dessen Sekundärwicklung mit einer passiven Messschaltung, vorzugsweise einem Widerstand, verbunden ist.

Wenn von einer Steuereinheit auf der Primärseite der Barriere ein Testsignal (Strom- oder Spannungssprung) an die Primärwicklung anlegt, kann durch Auswertung der zeitlichen Entwicklung des Stromverlaufs auf der Primärseite auf elektrische Kennwerte der mit der Sekundärwicklung verbundenen sekundärseitigen Messschaltung geschlossen werden.

Für den Fall, dass auf der Sekundärseite ein Widerstand angeschlossen ist, bedämpft sozusagen dieser Widerstand den Wandler und der Absolutwert des auf der Primärseite bei z.B. einem Spannungssprung ansteigenden Stroms hängt von dem Widerstandswert auf der Sekundärseite ab.

Im einfachsten Fall kann also durch eine absolute (einmalige) Erfassung eines Messsignals, insbesondere eines Stroms, bei Anlegen eines Spannungssprungs auf der Primärseite nach einer vorgegebenen Zeitdauer nach dem Anlegen des Sprungs auf den Widerstandswert der Sekundärseite geschlossen werden.

Allgemein wird also primärseitig ein Testsignal angelegt und ein Messsignal ebenfalls primärseitig an dem Wandler erfasst, dessen Verlauf von sekundärseitigen passiven Komponenten beeinflusst ist.

Diese Messung kann auch dadurch verfeinert werden, dass nicht einmalig, sondern mehrfach, nach vorbestimmten Zeitabläufen, der Strom erfasst wird. Wenn somit der Gradient des Stromanstiegs auf der Primärseite ermittelt werden kann, können beispielsweise Toleranzen der Induktivitäten des Wandlers kompensiert werden.

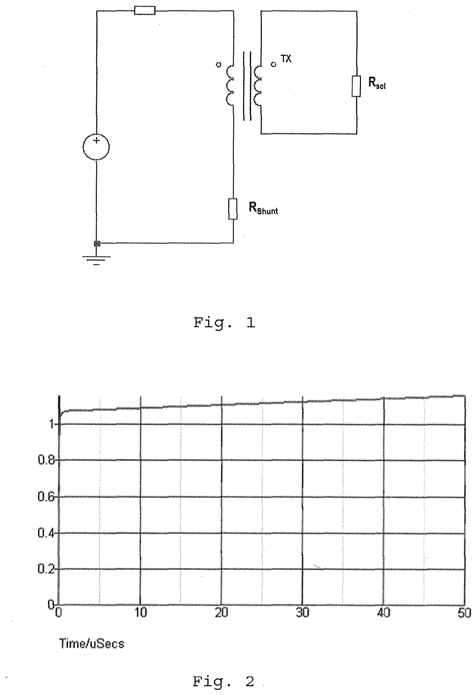

Fig. 1 zeigt exemplarisch eine Schaltungsanordnung die eine einfache Ausführungsform darstellt. Hier ist ein Widerstand Rₛₑₗ sekundärseitig parallel zu einem Wandler TX verbunden. Wird ein Testsignal an die Primärseitige Wicklung des Wandlers angelegt, so wird dieser Stimuliert. Direkt nach dem Anlegen des Testsignals fließt Strom durch den Widerstand Rₛₑₗ (Offset-Strom) und der Strom durch den Wandler beginnt anzusteigen. Primärseitig wird ein Messsignal, das insbesondere den Strom durch den Widerstand wiedergibt, an einem Messwiderstand (Shunt) R_{Shunt} erfasst.

Das Messsignal kann dabei auf zwei weisen bestimmt werden. Zunächst kann ein Wandler mit hoher Induktanz verwendet werden. Direkt nach anlegen des Testsignals gibt dann das Messsignal den Strom durch den Widerstand Rₛₑₗ wieder, da der Strom in dem Wandler sehr langsam ansteigt.

Dies ist exemplarisch in dem Diagramm in Fig. 2 gezeigt. Alternativ kann das Messsignal zu einer definierten/vorbestimmten Zeit erfasst werden. Da die Induktanz bekannt ist, können das (Offset-)Signal und der Strom durch den Widerstand bestimmt werden.

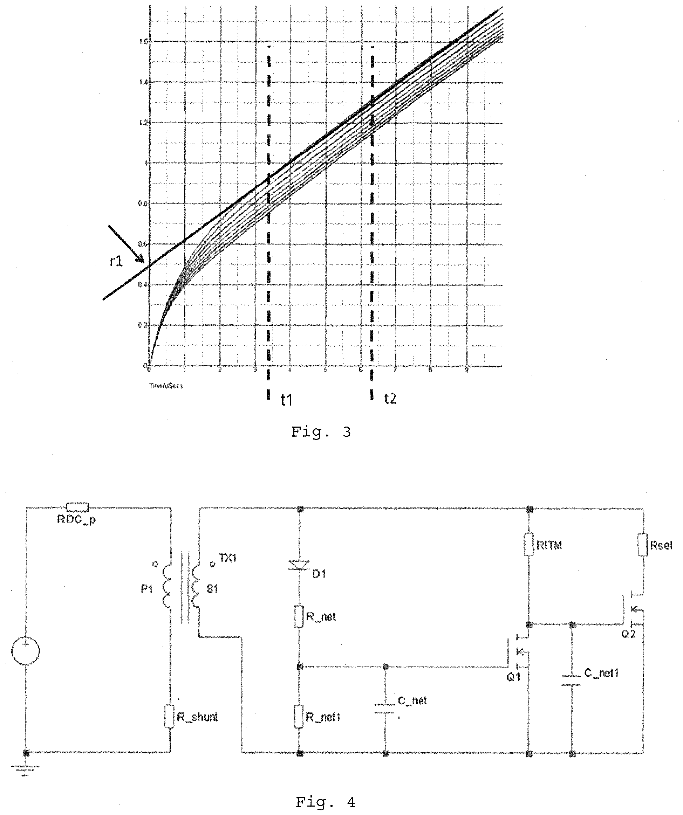

Nachteilig ist jedoch, dass das erfasste Messsignal von der Induktanz des Wandlers abhängt. Daher werden vorzugsweise wenigstens zwei Messsignalerfassungen durchgeführt und eine Extrapolation ausgeführt, die eine Aussage über das Messsignal nach Anlegen des Testsignals erlaubt. Dies ist in Fig. 3 veranschaulicht, wobei die gestrichelten Linien die Messzeitpunkte t1, t2 beispielhaft darstellen, während die durchgezogene Linie die Extrapolation andeutet. Der Pfeil bezeichnet ein mögliches Ergebnis r1 der Extrapolation, die zeitlich rückgerichtet erfolgt. Dabei kommt es insbesondere nicht darauf an, den Widerstandswert exakt zu bestimmen, sondern Veränderungen des Widerstands im Verhältnis, also relativ, zu erfassen.

Die in Fig. 1 dargestellte Schaltungsanordnung erlaubt bisher nur die Erfassung eines Messsignals, das den Widerstandswert bzw. die zeitliche Veränderung eines Widerstands wiedergibt. Sollen jedoch mehr Messsignale zurückgeführt werden, so muss eine andere Lösung gefunden werden. Da der Wandler im Allgemeinen der teuerste teil des Moduls ist, wäre eine Lösung mit mehreren Wandlern zwar denkbar, jedoch nicht vorteilhaft.

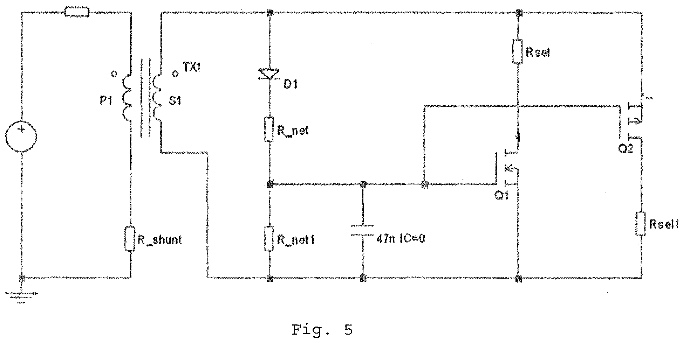

Wie in Figs. 4 und 5 gezeigt kann das Auslesen der Information über den Transformator aber in einem Zeitmultiplex erfolgen.

Dies ist in Figs. 4 und 5 dadurch ausgeführt, dass zwei unterschiedliche Widerstände Rₛₑₗ bzw. R_{ITM} ausgelesen werden sollen. Dazu sind diese Widerstände, die also die Information codieren, jeweils in Serie geschaltet zu einem Transistor (FET, MOSFET) Q1, Q2. Die zeitliche Auflösung des Auslesens der Information wird durch unterschiedliches zeitliches Aufladen von unterschiedlichen dimensionierten Kapazitäten C_net1 bzw. C_net ausgelöst (Fig. 4).

In dem Beispiel von Fig. 4 wird zuerst der Transistor Q2 durchgeschaltet und somit in einem ersten Zeitabschnitt der Wert des Widerstands Rₛₑₗ über den Transformator ausgelesen.

Langsamer lädt sich der Kondensator C_net. Wenn dieser ausreichend aufgeladen ist, wird er über den Transistor Q1 den Transistor Q2 abschalten und somit das Auslesen des Widerstands Rₛₑₗ beenden.

Gleichzeitig wird nunmehr durch das Einschalten des Transistors Q1 der Widerstand R_{ITM} ausgelesen.

Der Unterschied zwischen der Schaltungsanordnung aus Fig. 4 zu der Schaltungsanordnung aus Fig. 5 ist vor allem der, dass in ersterer die zeitliche Entzerrung durch das Schalten zweier n-Kanal FETs erfolgt, während in letzterer ein n-Kanal und ein p-Kanal FET zu Einsatz kommen.

Dies kann natürlich noch auf noch komplexere sekundärseitige passive Netzwerke erweitert werden, die auch mehr als zwei Widerstandskombinationen aufweisen können. So kann z.B. für jeden Widerstand ein Schaltelement vorgesehen sein und die Widerstände können binär permutiert werden, so dass jeweils nur ein Widerstand, oder eine bestimmte Widerstandskombination sekundärseitig aktiviert ist.

Die unterschiedlichen Widerstände R_{ITM} und Rₛₑₗ betreffen im vorliegenden Fall eine unterschiedliche physikalische Information, so dass also die primärseitige Messschaltung in unterschiedlichen zeitlichen Abschnitten unterschiedliche Informationen gewinnt. Indessen könnten diese Widerstände auch eine höherwertige Codierung in der Art mehrerer Bits darstellen, die die gleiche Information in feinerer Abstufung auflösen. Beispielsweise könnten beide Widerstände den Wahlwiderstand Rₛₑₗ darstellen.

Vorzugsweise handelt es sich bei der passiven Schaltung auf der Sekundärseite um ein passives Netzwerk in dem Sinne, dass keine eigene Niedervoltversorgung vorgesehen ist, sondern nur ein Anschluss über die Barriere mittels des Wandlers erfolgt.

Es kann selektiv (sprungartig) eine Gleichspannung V_{DC} auf die Primärseite des Transformators angelegt werden. Gemessen wird die zeitliche Entwicklung des Stromverlaufs über den Messwiderstand Rshunt. Wichtig kann vor allem die Spezifizierung der Primärseite hinsichtlich des Anlegens des Spannungssprungs bzw. des Messwiderstands Rshunt.

Der erste zeitliche Abschnitt in dem die erste Information ausgelesen wird, bezieht sich auf eine erste definierte Gruppe angelegter Spannungssprünge, während der zweite Abschnitt dann das Anlegen darauffolgender Spannungssprünge betrifft. Es handelt sich also nicht um zwei unterschiedliche zeitliche Abschnitte nach Anlegen eines einzigen Spannungssprungs. Die Spannungssprünge können durch selektives Zuschalten oder Anlegen der Gleichspannung V_{DC} erreicht werden. Dieses selektive und wiederholte Zuschalten kann beispielsweise mit einer vorgegebenen und änderbaren Frequenz oder Pulsweite erfolgen.

Es liegt vielmehr über mehrere Spannungssprünge eine Art kontinuierliche Erregung oder fortlaufendes inkrementelles Aufladen der Kondensatoren vor, die die Transistoren schalten.

## Patentansprüche

1. Modul für den Betrieb wenigstens einer LED, mit
- einem potentialtrennenden Wandler (TX1) mit wenigstens einer elektrisch isolierenden Barriere, die eine ausgehend von einer Netzspannung versorgte Primärseite von einer Sekundärseite des Moduls trennt, und
- einer sekundärseitigen passiven Schaltung, die in einem Versorgungspfad über den potentialtrennenden Wandler (TX1) des Moduls über die Barriere hinweg mit einer primärseitigen Steuerschaltung des Moduls verbunden ist, wobei die primärseitige Steuerschaltung dazu ausgelegt ist, an die sekundärseitige passive Schaltung ein Testsignal mit vorgegebener zeitlicher Entwicklung anzulegen und gleichzeitig dadurch sekundärseitig erzeugte in dem Versorgungspfad zurückgeführte Messsignale zu überwachen,
**dadurch gekennzeichnet, dass** die primärseitige Steuerschaltung dazu eingerichtet ist, die Messsignale an dem Wandler (TX1) zu erfassen, die im zeitlichen Abstand Widerstandswerte von mehreren sekundärseitigen passiven Schaltung verbundenen Widerständen (Rₛₑₗ, R_{ITM}) auf der Sekundärseite des Moduls wiedergeben.

2. Modul nach Anspruch 1,
wobei die Widerstände wenigstens zwei im Versorgungspfad der sekundärseitigen passiven Schaltung verbundene Widerstände (Rₛₑₗ, R_{ITM}) sind, die mit einem Schaltelement (Q1/Q2) verbunden sind, das so ausgelegt ist, dass es bei Anlegen des Testsignals auf der Primärseite zunächst den Versorgungspfad über einen der Widerstände (Rₛₑₗ)/beide Widerstände (Rₛₑₗ, R_{ITM}) schaltet und zeitlich beabstandet den Versorgungspfad über beide Widerstände (Rₛₑₗ, R_{ITM}) /einen der Widerstände (Rₛₑₗ) schaltet.

3. Modul nach Anspruch 1, wobei die Widerstände wenigstens zwei im Versorgungspfad der sekundärseitigen passiven Schaltung verbundene Widerstände (Rₛₑₗ, R_{ITM}) sind, die mit wenigstens zwei Schaltelementen (Q1, Q2) verbunden sind.

4. Modul nach Anspruch 3, wobei die Schaltelemente (Q1, Q2) so ausgelegt sind, dass bei Anlegen des Testsignals auf der Primärseite zunächst der Versorgungspfad über den ersten Widerstand (Rₛₑₗ) der wenigstens zwei Widerstände, und im zeitlichen Abstand der Versorgungspfad zusätzlich oder alternativ über den zweiten Widerstand (R_{ITM}) der wenigstens zwei Widerstände geschaltet wird.

5. Modul nach einem der Ansprüche 3 oder 4, wobei die wenigstes zwei Schaltelemente (Q1, Q2) so ausgelegt sind, dass bei Anlegen des Testsignals auf der Primärseite die wenigstens zwei Widerstände (Rₛₑₗ, R_{ITM}) binär permutiert eingeschaltet werden.

6. Modul nach einem der vorgehenden Ansprüche, wobei die primärseitige Steuerschaltung dazu eingerichtet ist, die Erfassung der Messsignale zu wiederholen.

7. Modul nach einem der vorgehenden Ansprüche, wobei die primärseitige Steuerschaltung dazu ausgelegt ist, eine Extrapolation auf Basis der Messsignale durchzuführen.

8. Modul nach Anspruch 7, wobei die Extrapolation den Widerstandswert der passiven Schaltung zum Zeitpunkt des Anlegens des Testsignals bestimmt.

9. Vorschaltgerät mit einem Modul nach einem der vorgehenden Ansprüche.

10. Leuchte mit einem Modul nach einem der Ansprüche 1 bis 8.

11. Verfahren zur passiven Rückführung eines Messsignals von einer Sekundärseite einer elektrisch isolierenden Barriere zu einer primärseitig dazu angeordneten Steuerschaltung, die in einem Versorgungspfad mit einer sekundärseitigen passiven Schaltung über einen potentialtrennenden Wandler (TX1) über die Barriere hinweg verbunden ist, wobei die primärseitige Steuerschaltung an die sekundärseitige passive Schaltung ein Testsignal mit vorgegebener zeitlicher Entwicklung anlegt und gleichzeitig dadurch sekundärseitig erzeugte, über den Versorgungspfad zurückgeführte Messsignale überwacht, **dadurch gekennzeichnet, dass** die primärseitige Steuerschaltung die Messsignale an dem Wandler (TX1) erfasst, die im zeitlichen Abstand Widerstandswerte von in der sekundärseitigen passiven Schaltung verbundenen Widerständen (Rₛₑₗ, R_{ITM}) auf der Sekundärseite wiedergeben.

## Claims

1. Module for the operation of at least one LED, comprising:
- a potential-separating converter (TX1) with at least one electrically-insulating barrier, which separates a primary side supplied by a mains voltage, from a secondary side of the module, and a secondary-side passive circuit which is connected in a supply path via the potential-separating transducer (TX1) of the module across the barrier to a primary-side control circuit of the module, wherein the primary-side control circuit is designed to apply a test signal with a predetermined time evolution to the secondary-side passive circuit, and simultaneously to monitor measurement signals generated in the secondary side and returned in the supply path,
**characterized in that**
the primary-side control circuit is arranged to detect the measurement signals at the converter (TX1), which reproduce resistance values of a plurality of secondary-side passive-circuit connected resistors (Rₛₑₗ, R_{ITM}) on the secondary side of the module at a time interval.

2. Module according to claim 1, wherein the resistors are at least two resistors (Rₛₑₗ, R_{ITM}) connected in the supply path of the secondary side passive circuit, and which are connected to a switching element (Q1, Q2) that, upon application of the test signal to the primary side, is designed to first switch to the supply path via one of the resistors (Rₛₑₗ)/both resistors (Rₛₑₗ, R_{ITM}) and switch the supply path via both resistors (Rₛₑₗ, R_{ITM})/one of the resistors (Rₛₑₗ) at a time interval.

3. Module according to claim 1, wherein the resistors are at least two resistors (Rₛₑₗ, R_{ITM}) connected in the supply path of the secondary-side passive circuit and connected to at least two switching elements (Q1, Q2).

4. Module according to claim 3, wherein the switching elements (Q1, Q2) are so designed, upon application of the test signal to the primary side, to first switch to the supply path via the first resistor (Rₛₑₗ) of the at least two resistors, and to the supply path in addition or alternatively via the second resistor (R_{ITM}) of the at least two resistors at a time interval.

5. Module according to one of the claims 3 or 4, wherein the least two switching elements (Q1, Q2) are so designed that upon applying the test signal to the primary side, the at least two resistors (Rₛₑₗ, R_{ITM}) are switched to binary permutated.

6. Module according to one of the preceding claims, wherein the primary-side control circuit is designed to repeat the detection of the measurement signals.

7. Module according to one of the preceding claims, wherein the primary-side control circuit is designed to perform an extrapolation based on the measurement signals.

8. Module according to claim 7, wherein the extrapolation determines the resistance of the passive circuit at the time of applying the test signal.

9. Ballast with a module according to one of the preceding claims.

10. Luminaire with a module according to one of the claims 1 to 8.

11. Method for the passive feedback of a measurement signal from a secondary side of an electrically-insulating barrier to a control circuit arranged on the primary side, and which is connected across the barrier in a supply path with a secondary-side passive circuit via a potential-separating converter (TX1), wherein the primary-side control circuit is designed to apply a test signal with a predetermined time evolution to the secondary-side passive circuit, and simultaneously to monitor measurement signals generated in the secondary side and returned in the supply path,
**characterized in that**
the primary-side control circuit detects the measurement signals at the converter (TX1), which are reproduced at a time interval as resistance values in the resistors (Rₛₑₗ, R_{ITM}) connected in the secondary side passive circuit on the secondary side.

## Revendications

1. Module pour l'exploitation d'au moins une LED, avec
- un convertisseur à séparation de potentiel (TX1) avec au moins une barrière électriquement isolante, qui sépare un côté primaire alimenté par une tension de réseau d'un côté secondaire du module et
- un circuit passif côté secondaire, qui est relié dans un chemin d'alimentation par l'intermédiaire du convertisseur à séparation de potentiel (Tx1) du module au-delà de la barrière avec un circuit de commande côté primaire, le circuit de commande côté primaire étant conçu pour appliquer au circuit passif côté secondaire un signal de test avec une évolution prédéterminée dans le temps et pour surveiller en même temps des signaux de mesure générés côté secondaire et retournés dans le chemin d'alimentation,
**caractérisé en ce que**
le circuit de commande côté primaire est conçu pour mesurer les signaux de mesure au niveau du convertisseur (TX1), qui reproduisent, avec un écart temporel, des valeurs de résistance de plusieurs résistances (Rₛₑₗ, R_{ITM}) du circuit passif côté secondaire sur le côté secondaire du module.

2. Module selon la revendication 1,
les résistances étant au moins deux résistances (Rₛₑₗ, R_{ITM}) reliées dans le chemin d'alimentation du circuit passif côté secondaire, qui sont reliés avec un élément de commutation (Q1/Q2) qui est conçu de façon à ce que, lors de l'application du signal de test au côté primaire, il commute d'abord le chemin d'alimentation par une des résistances (Rₛₑₗ) / les deux résistances (Rₛₑₗ, RITM), et, avec un écart temporel, commute le chemin d'alimentation par les deux résistances (Rₛₑₗ, R_{ITM}) / une des deux résistances (Rₛₑₗ).

3. Module selon la revendication 1, les résistances étant au moins deux résistances (Rₛₑₗ, R_{ITM}) reliées dans le chemin d'alimentation du circuit passif côté secondaire, qui sont reliées avec au moins deux éléments de commutation (Q1, Q2).

4. Module selon la revendication 3, les éléments de commutation (Q1, Q2) étant conçus de façon à ce que, lors de l'application du signal de test au côté primaire, le chemin d'alimentation est d'abord commuté par la première résistance (Rₛₑₗ) des au moins deux résistances, et, avec un écart temporel, le chemin d'alimentation est en outre ou en variante commuté par la deuxième résistance (R_{ITM}) des au moins deux résistances.

5. Module selon l'une des revendications 3 ou 4, les au moins deux éléments de commutation (Q1, Q2) étant conçus de façon à ce que, lors de l'application du signal de test au côté primaire, les au moins deux résistances (Rₛₑₗ, R_{ITM}) sont activées de manière binaire et permutée.

6. Module selon l'une des revendications précédentes, le circuit de commande côté primaire étant conçu pour répéter la détection des signaux de mesure.

7. Module selon l'une des revendications précédentes, le circuit de commande côté primaire étant conçu pour effectuer une extrapolation sur la base des signaux de mesure.

8. Module selon la revendication 7, l'extrapolation déterminant la valeur de résistance du circuit passif au moment de l'application du signal de test.

9. Ballast avec un module selon l'une des revendications précédentes.

10. Luminaire avec un module selon l'une des revendications 1 à 8.

11. Procédé de retour passif d'un signal de mesure d'un côté secondaire d'une barrière électriquement conductrice vers un circuit de commande côté primaire, qui est relié dans un chemin d'alimentation avec un circuit passif côté secondaire par l'intermédiaire d'un convertisseur à séparation de potentiel (TX1) au-delà de la barrière, le circuit de commande côté primaire appliquant au circuit passif côté secondaire un signal de test avec une évolution prédéterminée dans le temps et qui surveille en même temps les signaux de mesure ainsi générés retournés par l'intermédiaire du chemin d'alimentation,
**caractérisé en ce que**
le circuit de commande côté primaire détecte les signaux de mesure au niveau du convertisseur (TX1) qui reproduisent, sur le côté secondaire, avec un écart temporel, les valeurs de résistances de résistances (Rₛₑₗ, R_{ITM}) reliées dans le circuit passif côté secondaire.
